# EUROPÄISCHE PATENTSCHRIFT

(11) **EP 3 137 260 B1**
(45) Veröffentlichungstag und Bekanntmachung des Hinweises auf die Patenterteilung: **24.06.2020**
(21) Anmeldenummer: 16721359.4
(22) Anmeldetag: 02.05.2016
(51) Int. Cl.: B25B 5/06, B25B 5/16

(54) **SPANNBOLZEN UND SPANNVORRICHTUNG MIT EINEM SOLCHEN SPANNBOLZEN**
CLAMPING BOLT AND CLAMPING DEVICE COMPRISING SUCH A CLAMPING BOLT
BOULON DE SERRAGE ET DISPOSITIF DE SERRAGE PRÉSENTANT UN TEL BOULON DE SERRAGE

(30) Priorität: 19.06.2015 DE 102015007938
(43) Veröffentlichungstag der Anmeldung: 08.03.2017
(73) Patentinhaber: Ludwig Ehrhardt GmbH, 35321 Laubach (DE)
(72) Erfinder: WILLINGSHOFER, Thomas, 57334 Bad Laasphe (DE)
(74) Vertreter: v. Bezold & Partner Patentanwälte - PartG mbB
(86) Internationale Anmeldenummer: PCT/EP2016/000712
(87) Internationale Veröffentlichungsnummer: WO 2016/202417

(56) Entgegenhaltungen:
- DE-B4- 10 141 759

## Beschreibung

Die Erfindung betrifft eine Spannvorrichtung zum Spannen eines Bauteils (z. B. Werkzeug oder Werkzeugträger) mittels eines Spannbolzens auf einem Untergrund (z. B. in einer Werkzeugmaschine).

Ein derartiger Spannbolzen 1 ist beispielsweise aus DE 101 41 759 B4 bekannt und in den Figuren 1A und 1B schematisch dargestellt. Der Spannbolzen 1 ist hierbei in einer Spannvorrichtung 2 montiert, wobei die Spannvorrichtung 2 den Spannbolzen in einer durch einen Doppelpfeil dargestellten Spannrichtung einfahren oder ausfahren kann. Die Spannvorrichtung 2 mit dem Spannbolzen 1 ermöglicht hierbei ein Spannen eines Bauteils 3 (z. B. Werkzeug oder Werkzeugträger) auf einem Untergrund 4 (z. B. in einer Werkzeugmaschine). Der Spannbolzen 1 und das zu spannende Bauteil 3 weisen jeweils schräg geneigte Spannflächen 5 bzw. 6 auf, die planparallel zueinander ausgerichtet sind und bei einem Spannvorgang aufeinander gleiten. Bei einem Spannvorgang wird der Spannbolzen 1 von der Spannvorrichtung 2 axial in der Spannrichtung ausgefahren. Dabei gleiten die beiden Spannflächen 5, 6 des Spannbolzens 1 einerseits bzw. des Bauteils 3 andererseits aufeinander, wodurch das Bauteil 3 auf dem Untergrund 4 gedrückt wird.

Der Neigungswinkel der beiden Spannflächen 5, 6 ist hierbei jedoch so groß, dass keine Selbsthemmung auftritt. Dies bedeutet, dass der Spannbolzen 1 von dem Bauteil 3 in die Spannvorrichtung 2 hineingeschoben werden kann, wenn der Spannbolzenantrieb ausfällt und keine axiale Spannkraft mehr auf den Spannbolzen 1 ausübt. Dies kann zur Folge haben, dass das Bauteil 3 nicht mehr fest eingespannt ist und sich im Extremfall von dem Untergrund 4 lösen kann, was zu Beschädigungen führen kann und die Arbeitssicherheit beeinträchtigt.

Der Spannbolzen 1 weist deshalb an seinem distalen Ende in seiner Mantelfläche eine Auflagefläche 7 auf, die auf einer entsprechenden Auflagefläche 8 des Bauteils 3 aufliegen kann. Wenn nun der Spannbolzenantrieb ausfällt und deshalb keine axiale Spannkraft mehr auf den Spannbolzen 1 ausübt, so wird der Spannbolzen 1 von dem Bauteil 3 nur so weit in die Spannvorrichtung 2 hineingeschoben, bis die beiden Auflageflächen 7, 8 aufeinander liegen. Hierbei ist zu erwähnen, dass die beiden Auflageflächen 7, 8 exakt parallel zu der Spannrichtung ausgerichtet sind, so dass die reibschlüssige Verbindung zwischen den beiden Auflageflächen 7, 8 keine axiale Kraft mehr auf den Spannbolzen 1 ausübt. Hierdurch wird weitgehend verhindert, dass sich das Bauteil 3 bei einem Ausfall des Spannbolzenantriebs von dem Untergrund 4 lösen kann.

Allerdings kann auch hierbei nicht hinreichend sicher ausgeschlossen werden, dass sich das Bauteil 3 bei einem Ausfall des Spannbolzenantriebs von dem Untergrund 4 löst, was aus Arbeitssicherheitsgründen bedenklich ist. Bei einem Ausfall des Spannbolzenantriebs ist es deshalb bei dieser technischen Lösung nicht erlaubt, den Maschinenbereich zu betreten, da immer noch die Gefahr besteht, dass sich das Bauteil 3 von dem Untergrund 4 löst.

Diese Druckschrift offenbart also nur eine reibschlüssige Abwurfsicherung.

Ferner ist zum Stand der Technik hinzuweisen auf DE 28 42 783 A1. Diese Druckschrift offenbart jedoch lediglich ein Futter für eine Handwerkzeugmaschine (z. B. Schlaghammer) und ist damit gattungsfremd.

Ferner ist aus US 2015/0091232 A1 eine Spannvorrichtung bekannt, die jedoch gattungsfremd ist, weil sie keine verschiebbaren Spannbolzen aufweist.

Schließlich ist noch hinzuweisen auf DE 697 23 821 T2. Diese Druckschrift offenbart jedoch ebenfalls nur eine Spannvorrichtung mit einer reibschlüssigen Abwurfsicherung.

Der Erfindung liegt deshalb gegenüber dieser bekannten technischen Lösung die Aufgabe zugrunde, die Sicherheit beim Ausfall des Spannbolzenantriebs zu erhöhen und zwar möglichst so weit, dass Bedienungspersonal den Maschinenbereich ungefährdet betreten kann.

Diese Aufgabe wird durch eine erfindungsgemäße Spannvorrichtung gemäß dem Hauptanspruch gelöst.

Der Spannbolzen der erfindungsgemäßen Spanvorrichtung weist zunächst in Übereinstimmung mit dem Stand der Technik ein Montageende auf, das im Betrieb in einer Spannvorrichtung montiert ist, wobei die Spannvorrichtung den Spannbolzen entlang einer Spannrichtung in die Spannvorrichtung einfahren oder aus der Spannvorrichtung ausfahren kann. In dem bevorzugten Ausführungsbeispiel der Erfindung führt der Spannbolzen also eine reine Linearbewegung aus.

Darüber hinaus weist der erfindungsgemäße Spannbolzen in Übereinstimmung mit dem Stand der Technik ein freies Ende mit einer schräg zu der Spannrichtung geneigten Spannfläche auf. Die Spannfläche an dem Spannbolzen liegt bei einem Spannvorgang an einer entsprechend geneigten Spannfläche des zu spannenden Bauteils auf. Hierbei können die schrägen Spannflächen des Spannbolzens einerseits und des zu spannenden Bauteils andererseits beim Ausfahren des Spannbolzens aufeinander gleiten, wodurch das zu spannende Bauteil gegen den Untergrund gedrückt wird.

Der erfindungsgemäße Spannbolzen zeichnet sich nun gegenüber dem Stand der Technik durch ein zusätzliches Sicherungselement aus, welches den Spannbolzen formschlüssig mit dem zu spannenden Bauteil verbinden kann und das zu spannende Bauteil dadurch vor einem Abwurf sichert, wodurch die Betriebssicherheit wesentlich erhöht wird.

In dem bevorzugten Ausführungsbeispiel der Erfindung handelt es sich bei dem zu spannenden Bauteil um ein Werkzeug oder einen Werkzeugträger. Bei dem Untergrund kann es sich dagegen beispielsweise um eine Werkzeugmaschine handelt, in der das Werkzeug bzw. der Werkzeugträger festgespannt wird. Die Erfindung ist jedoch hinsichtlich des zu spannenden Bauteils und des Untergrunds nicht auf Werkzeuge, Werkzeugträger bzw. Werkzeugmaschinen beschränkt, sondern grundsätzlich auch mit anderen Bauteilen realisierbar, die auf einem bestimmten Untergrund festgespannt werden sollen.

In dem bevorzugten Ausführungsbeispiel der Erfindung ist das Sicherungselement eine Nase, die an dem Spannbolzen angebracht ist und quer zur Spannrichtung von dem Spannbolzen absteht, um in eine Nut in dem zu spannenden Bauteil einzugreifen. Die Nase an dem Spannbolzen bildet hierbei also eine formschlüssige Verbindung mit der Nut in dem zu spannenden Bauteil, wodurch ein Abwurf des zu spannenden Bauteils verhindert wird. Vorzugsweise wirkt diese formschlüssige Verbindung in axialer Richtung, d. h. in der Spannrichtung. Es ist jedoch im Rahmen der Erfindung auch möglich, dass die formschlüssige Verbindung auch quer zur Spannrichtung wirkt, was jedoch nicht zwingend erforderlich ist.

Beim Ausfahren des Spannbolzens besteht die Gefahr, dass die seitlich (d. h. quer zur Spannrichtung) von dem Spannbolzen hervorstehende Nase an ihrem distalen Ende mit einer Flanke an dem zu spannenden Bauteil zusammenstößt, was zu einem Blockieren des Spannbolzens oder zu einer Beschädigung der Nase führen kann. Die Nase weist deshalb an ihrem distalen Ende vorzugsweise eine Auflaufschräge auf, um beim Ausfahren des Spannbolzens aus der Spannvorrichtung eine Blockierung des Spannbolzens und eine Beschädigung der Nase zu vermeiden.

In einer Variante der Erfindung ist die Nase an dem Spannbolzen im Querschnitt quer zu der Spannrichtung mittig angeordnet und erstreckt sich nicht über die gesamte Breite des Spannbolzens. In einer anderen Variante der Erfindung erstreckt sich die Nase dagegen im Querschnitt quer zu der Spannrichtung über die gesamte Breite des Spannbolzens. Ferner ist noch eine dritte Variante möglich, in der die Nase zwei Nasenteile aufweist, die im Querschnitt quer zu der Spannrichtung beide seitlich außen und außermittig angeordnet sind.

In einem Ausführungsbeispiel der Erfindung grenzt die Nase in axialer Richtung übergangslos an die schräge Spannfläche, d. h. zwischen der Nase einerseits und der schrägen Spannfläche liegt im Gegensatz zu dem eingangs beschriebenen Stand der Technik keine weitere Auflagefläche, die parallel zu der Spannrichtung ausgerichtet ist.

In einem anderen Ausführungsbeispiel der Erfindung liegt dagegen zwischen der Nase und der schrägen Spannfläche eine Auflagefläche, die parallel zu der Spannrichtung ausgerichtet ist, wobei die Auflagefläche des Spannbolzens auf einer entsprechenden, parallel zu der Spannrichtung ausgerichteten Auflagefläche an dem zu spannenden Bauteil aufliegen kann, wie bereits eingangs unter Bezugnahme auf den Stand der Technik beschrieben worden ist.

Die Spannfläche des Spannbolzens ist vorzugsweise relativ zu der Spannrichtung mit einem Winkel geneigt, der im Bereich von 2°-45°, 5°-30° oder 15°-25° liegen kann. Ein Neigungswinkel von 20° hat sich hierbei als vorteilhaft erwiesen.

Die vorstehend bereits erwähnte Auflaufschräge an der Nase kann ebenfalls gegenüber der Spannrichtung mit einem Winkel von 2°-45° angewinkelt sein.

Hinsichtlich der konstruktiven Gestaltung der Nase ist zu erwähnen, dass die Nase einstückig an den Spannbolzen angeformt sein kann. Es besteht jedoch alternativ auch die Möglichkeit, dass die Nase ein separates Bauteil ist, das dann mit dem Spannbolzen verbunden wird.

Bei dem bevorzugten Ausführungsbeispiel der Erfindung steht die Nase von der Mantelfläche des Spannbolzens seitlich mit einer bestimmten Nasenhöhe ab und die Nut in dem zu spannenden Bauteil weist eine bestimmte Nuttiefe auf. Vorzugsweise entspricht die Nasenhöhe hierbei im Wesentlichen der Nuttiefe oder ist sogar kleiner. Dies ist sinnvoll, damit die Nase mit ihrer gesamten Erstreckung in die Nut eintauchen kann.

Weiterhin ist zu erwähnen, dass die Nut in dem zu spannenden Bauteil in axialer Richtung eine bestimmte Nutlänge aufweist, die vorzugsweise größer ist als die axiale Länge der Nase, insbesondere größer als 150° oder 200° der axialen Länge der Nase.

Die erfindungsgemäße formschlüssige Sicherung durch eine formschlüssige Verbindung ermöglicht vorteilhaft einen Verzicht auf eine axiale Verriegelung des Spannbolzens in der Spannvorrichtung. So weisen herkömmliche Spannvorrichtungen üblicherweise eine axiale Verriegelung für den Spannbolzen auf, um den Spannbolzen auch dann noch in seiner Spannstellung zu halten, wenn der eigentliche Spannbolzenantrieb ausgefallen ist. Die Erfindung ermöglicht nun einen Verzicht auf eine solche axiale Verriegelung. Allerdings beansprucht die Erfindung auch Schutz für eine Spannvorrichtung, die eine solche herkömmliche axiale Verriegelung ebenfalls aufweist. Besonders vorteilhaft ist die Erfindung, wenn sich das zu spannende Bauteil bezüglich der Schwerkraft über dem Spannbolzen befindet, da das zu spannende Bauteil dann bei einem Ausfall der axialen Spannkraft mit seiner Nut quasi auf die Nase fällt.

Die erfindungsgemäße Spannvorrichtung bietet vorteilhaft eine erhöhte Betriebssicherheit, so dass der Maschinenbereich (z. B. Kabine) von Bedienungspersonal betreten werden kann, wenn der Spannbolzenantrieb ausgefallen ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine schematische Darstellung einer herkömmlichen Spannvorrichtung mit einem herkömmlichen Spannbolzen,
- Figur 1B: eine Detailansicht aus Figur 1A,
- Figur 2A: eine erfindungsgemäße Spannvorrichtung mit einem erfindungsgemäßen Spannbolzen mit einer Nase zur Abwurfsicherung,
- Figur 2B: eine vergrößerte Detailansicht des Spannbolzens mit der Nase,
- Figur 3: eine Abwandlung von Figur 2A,
- Figuren 4A-4C: verschiedene Querschnittsansichten mit verschiedenen Anordnungen der Nase.

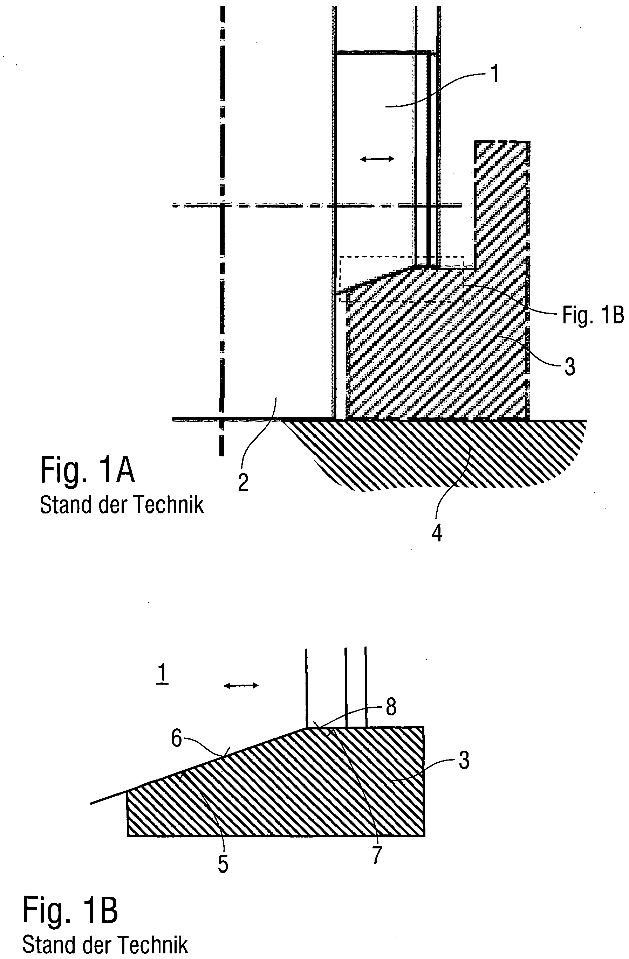

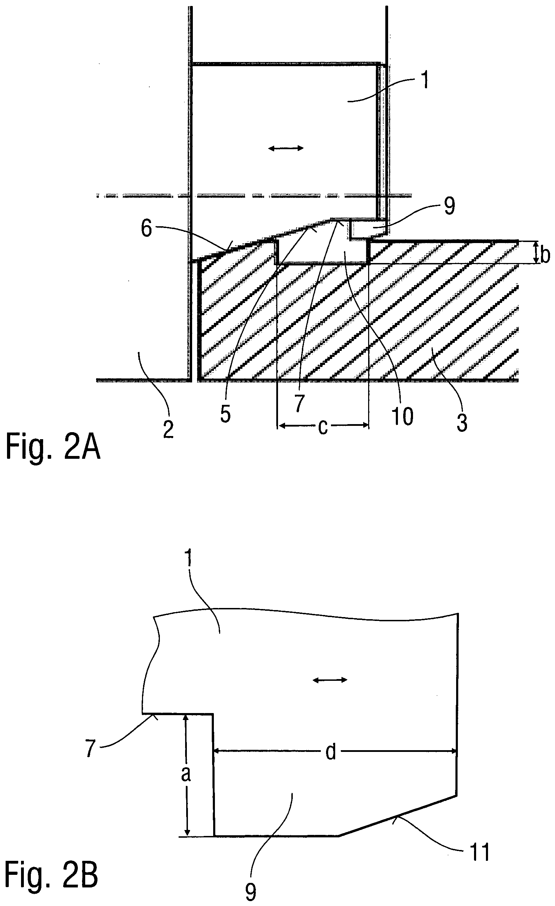

Die Figuren 2A und 2B zeigen verschiedene Ansichten eines erfindungsgemäßen Ausführungsbeispiels der Spannvorrichtung 2 mit dem Spannbolzen 1. Dieses erfindungsgemäße Ausführungsbeispiel stimmt weitgehend mit dem eingangs beschriebenen und in den Figuren 1A und 1B dargestellten herkömmlichen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Spannbolzen 1 an seinem distalen Ende in seiner Mantelfläche eine seitlich vorspringende Nase 9 aufweist, die eine formschlüssige Verbindung mit einer Nut 10 in dem zu spannenden Bauteil 3 herstellen kann, um zu verhindern, dass sich das Bauteil 3 von dem Untergrund 4 lösen kann, wenn der Spannbolzenantrieb ausgefallen ist.

Bei einem Ausfall des Spannbolzenantriebs kann der Spannbolzen 1 nämlich nur so weit in axialer Richtung in die Spannvorrichtung 2 eingeschoben werden, bis die Nase 7 dann in die Nut 10 in dem zu spannenden Bauteil 3 eingreifen kann, wodurch dann schließlich eine weitere Axialbewegung des Spannbolzens 1 verhindert wird. Hierbei ist zu erwähnen, dass sich das Bauteil 3 in der Regel bezüglich der Schwerkraft über dem Spannbolzen 1 befindet, so dass das Bauteil 3 dann mit seiner Nut 10 quasi die Nase 9 an dem Spannbolzen 1 fällt.

Die Nase 9 weist hierbei eine seitliche Erstreckung a auf, die etwas kleiner ist als die Nuttiefe b der Nut 10 in dem zu spannenden Bauteil 3. Dies ist sinnvoll, damit die Nase 9 mit ihrer gesamten Erstreckung a in die Nut 10 eintauchen kann.

Ferner ist zu erwähnen, dass die Nut 10 in dem zu spannenden Bauteil 3 eine bestimmte Nutlänge c in axialer Richtung aufweist, die deutlich größer ist als die Länge d der Nase 9 in axialer Richtung.

Darüber hinaus ist noch zu erwähnen, dass die Nase 9 an ihrem distalen Ende eine Auflaufschräge 11 aufweist, die beim Ausfahren des Spannbolzens 1 verhindert, dass der Spannbolzen 1 blockiert wird oder die Nase 9 an einer Flanke des Bauteils 3 beschädigt wird.

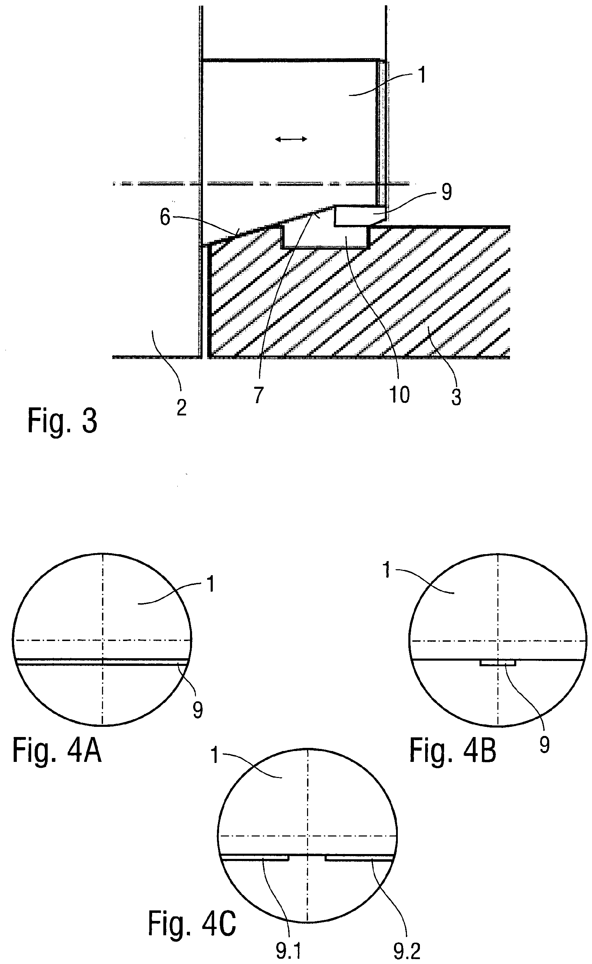

Figur 3 zeigt eine Abwandlung des Ausführungsbeispiels gemäß den Figuren 2A und 2B, wobei diese Abwandlung weitgehend mit dem vorherigen Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Nase 9 in axialer Richtung übergangslos an die Spannfläche 6 des Spannbolzens 1 angrenzt, so dass dazwischen nicht die Auflagefläche 7 liegt.

Die Figuren 4A-4C zeigen verschiedene mögliche Querschnittsansichten durch den Spannbolzen 1 im Bereich der Nase 9.

Bei der Variante gemäß Figur 4A erstreckt sich die Nase 9 über die gesamte Breite des Spannbolzens 1.

Bei der Variante gemäß Figur 4B ist die Nase 9 dagegen nur mittig angeordnet und erstreckt sich nicht über die gesamte Breite des Spannbolzens.

Schließlich besteht die Nase 9 bei der Variante gemäß Figur 4C aus zwei Nasenteilen 9.1, 9.2, die beide seitlich und außermittig angeordnet sind.

### Bezugszeichenliste:

- 1: Spannbolzen
- 2: Spannvorrichtung
- 3: Bauteil (z. B. Werkzeug oder Werkzeugträger)
- 4: Untergrund (z. B. Werkzeugmaschine)
- 5: Spannfläche des Spannbolzens
- 6: Spannfläche des Bauteils
- 7: Auflagefläche des Spannbolzens
- 8: Auflagefläche des Bauteils
- 9: Nase
- 9.1: Nasenteil
- 9.2: Nasenteil
- 10: Nut in dem Bauteil
- 11: Auflaufschräge an der Nase
- a: Seitliche Erstreckung der Nase
- b: Nuttiefe der Nut
- c: Nutlänge der Nut
- d: Länge der Nase in axialer Richtung

## Patentansprüche

1. Spannvorrichtung (2) zum Spannen eines Bauteils (3) auf einem Untergrund (4), mit
a) einem Spannbolzen (1) zum Spannen des Bauteils (3) auf dem Untergrund (4),
a1) wobei der Spannbolzen (1) ein Montageende aufweist, das im Betrieb in der Spannvorrichtung (2) montiert ist, und
a2) wobei der Spannbolzen ein freies Ende aufweist mit einer schräg zu einer Spannrichtung (↔) geneigten Spannfläche (5) zur Auflage auf einer entsprechenden schräg geneigten Spannfläche (6) des zu spannenden Bauteils (3), wobei die schrägen Spannflächen (5, 6) des Spannbolzens (1) einerseits und des zu spannenden Bauteils (3) andererseits beim Ausfahren des Spannbolzens (1) aufeinander gleiten und das zu spannende Bauteil (3) dabei gegen den Untergrund (4) drücken, und mit
b) einem Spannbolzenantrieb, der den Spannbolzen (1) entlang einer Spannrichtung (↔) wahlweise in die Spannvorrichtung (2) einfahren oder aus der Spannvorrichtung (2) ausfahren kann,
**dadurch gekennzeichnet,**
c) **dass** der Spannbolzen (1) ein Sicherungselement (9) aufweist, welches den Spannbolzen (1) formschlüssig mit dem zu spannenden Bauteil (3) verbinden kann und das zu spannende Bauteil (3) dadurch vor einem Abwurf sichert, und
d) **dass** das Sicherungselement (9) eine Nase (9) ist, die an dem Spannbolzen (1) angebracht ist und quer zur Spannrichtung (↔) von dem Spannbolzen (1) absteht, um in eine Nut (10) in dem zu spannenden Bauteil (3) einzugreifen.

2. Spannvorrichtung (2) nach Anspruch 1, **dadurch gekennzeichnet, dass** die Nase (9) an ihrem distalen Ende eine Auflaufschräge (11) aufweist, um beim Ausfahren des Spannbolzens (1) aus der Spannvorrichtung (2) ein Blockieren des Spannbolzens (1) zu vermeiden.

3. Spannvorrichtung (2) nach einem der vorhergehenden Ansprüche, **dadurch gekennzeichnet,**
a) **dass** die Nase (9) im Querschnitt quer zu der Spannrichtung (↔) mittig angeordnet ist und sich nicht über die gesamte Breite des Spannbolzens (1) erstreckt, oder
b) **dass** sich die Nase (9) im Querschnitt quer zu der Spannrichtung (↔) über die gesamte Breite des Spannbolzens (1) erstreckt, oder
c) **dass** die Nase (9) zwei Nasenteile (9.1, 9.2) aufweist, die im Querschnitt quer zu der Spannrichtung (↔) beide seitlich außen und außermittig angeordnet sind.

4. Spannvorrichtung (2) nach einem der vorhergehenden Ansprüche, **dadurch gekennzeichnet,**
a) **dass** an der Mantelfläche des Spannbolzens (1) in axialer Richtung zwischen der Nase (9) und der schrägen Spannfläche eine Auflagefläche (7) liegt, die parallel zu der Spannrichtung (↔) ausgerichtet ist, wobei die Auflagefläche des Spannbolzens (1) auf einer entsprechenden, parallel zu der Spannrichtung (↔) ausgerichteten Auflagefläche (8) an dem zu spannenden Bauteil (3) aufliegen kann, oder
b) **dass** die Nase (9) in axialer Richtung übergangslos an die schräge Spannfläche (5) angrenzt.

5. Spannvorrichtung (2) nach einem der vorhergehenden Ansprüche, **dadurch gekennzeichnet,**
a) **dass** die Spannfläche (5) des Spannbolzens (1) zu der Spannrichtung (↔) mit einem Winkel geneigt ist, der größer als 2°, 5°, 10° oder 15° und/oder kleiner als 45°, 30° oder 25° ist, und/oder
b) **dass** die Auflaufschräge (11) an der Nase (9) zu der Spannrichtung (↔) mit einem Winkel geneigt ist, der größer als 2°, 5°, 10° oder 15° und/oder kleiner als 45°, 30° oder 25° ist, und/oder
c) **dass** die Spannflächen (5, 6) des Spannbolzens (1) einerseits und des zu spannenden Bauteils (3) andererseits planparallel sind, und/oder
d) **dass** die Nase (9) einstückig an den Spannbolzen (1) angeformt ist

6. Spannvorrichtung (2) nach einem der vorhergehenden Ansprüche, **dadurch gekennzeichnet,**
a) **dass** die Nase (9) von der Mantelfläche des Spannbolzens
(1) seitlich mit einer bestimmten Nasenhöhe (a) absteht und die Nut (10) in dem zu spannenden Bauteil (3) eine bestimmte Nuttiefe (b) quer zu der Spannrichtung (↔) aufweist, wobei die Nasenhöhe (a) im Wesentlichen gleich der Nuttiefe (b) oder kleiner ist, und/oder
b) **dass** die Nut (10) in dem zu spannenden Bauteil (3) in der Spannrichtung (↔) axialer Richtung eine Nutlänge (c) aufweist, die größer ist als die axiale Länge (d) der Nase (9).

7. Spannvorrichtung (2) nach einem der vorhergehenden Ansprüche, **dadurch gekennzeichnet, dass** die Spannvorrichtung (2) keine axiale Verriegelung aufweist, um den Spannbolzen (1) axial zu verriegeln.

8. Spannvorrichtung (2) nach einem der vorhergehenden, **dadurch gekennzeichnet, dass** sich das zu spannende Bauteil (3) bezüglich der Schwerkraft über dem Spannbolzen (1) befindet, so dass das spannende Bauteil (3) bei einem Ausfall der axialen Spannkraft mit der Nut (10) auf die Nase (9) fällt.

## Claims

1. Clamping device (2) for clamping a component (3) on a base (4), with
a) a clamping bolt (1) for clamping the component (3) on the base (4),
a1) wherein the clamping bolt (1) has a mounting end which in operation is mounted in the clamping device (2), and
a2) wherein the clamping bolt has a free end with a clamping surface (5) inclined obliquely to a clamping direction (↔) for resting on a corresponding obliquely inclined clamping surface (6) of the component (3) to be clamped, wherein the oblique clamping surfaces (5, 6) of the clamping bolt (1) on the one hand and of the component (3) to be clamped on the other slide on one another when the clamping bolt (1) is extended and thereby press the component (3) to be clamped against the base (4), and with
b) a clamping bolt drive, which can optionally retract the clamping bolt (1) into the clamping device (2) or extend it from the clamping device (2) along a clamping direction (↔),
**characterized in**
c) **that** the clamping bolt (1) has a securing element (9) which can connect the clamping bolt (1) form-fittingly to the component (3) to be clamped and thereby secures the component (3) to be clamped against being thrown away, and
d) **that** the securing element (9) is a nose (9) which is attached to the clamping bolt (1) and protrudes from the clamping bolt (1) transversely to the clamping direction (↔) in order to engage in a groove (10) in the component (3) to be clamped.

2. Clamping device (2) according to claim 1, **characterized in that** the nose (9) has an overrun chamfer (11) at its distal end in order to prevent blocking of the clamping bolt (1) when the clamping bolt (1) is extended from the clamping device (2).

3. Clamping device (2) according to one of the preceding claims, **characterized in**
a) **that** the nose (9) is arranged centrally in the cross-section transverse to the clamping direction (↔) and does not extend over the entire width of the clamping bolt (1), or
b) **that** the nose (9) extends in cross-section transversely to the clamping direction (↔) over the entire width of the clamping bolt (1), or
c) **that** the nose (9) has two nose parts (9.1, 9.2) which, in cross-section transverse to the clamping direction (↔), are both arranged laterally on the outside and eccentrically.

4. Clamping device (2) according to one of the preceding claims, **characterized in**
a) **that** on the outer surface of the clamping bolt (1), in the axial direction between the nose (9) and the inclined clamping surface, there is a bearing surface (7) which is aligned parallel to the clamping direction (↔), it being possible for the bearing surface of the clamping bolt (1) to rest on a corresponding bearing surface (8), aligned parallel to the clamping direction (↔), on the component (3) to be clamped, or
b) **that** the nose (9) is adjacent to the inclined clamping surface (5) in the axial direction without transition.

5. Clamping device (2) according to one of the preceding claims, **characterized in**
a) **that** the clamping surface (5) of the clamping bolt (1) is inclined to the clamping direction (↔) at an angle which is greater than 2°, 5°, 10° or 15° and/or smaller than 45°, 30° or 25°, and/or
b) **that** the overrun chamfer (11) at the nose (9) is inclined to the direction of tension (↔) at an angle greater than 2°, 5°, 10° or 15° and/or less than 45°, 30° or 25°, and/or
c) **that** the clamping surfaces (5, 6) of the clamping bolt (1) on the one hand and of the component (3) to be clamped on the other hand are plane-parallel, and/or
d) **that** the nose (9) is integrally formed on the clamping bolt (1).

6. Clamping device (2) according to one of the preceding claims, **characterized in**
a) **that** the nose (9) projects laterally from the outer surface of the clamping bolt (1) by a specific nose height (a) and the groove (10) in the component (3) to be clamped has a specific groove depth (b) transverse to the clamping direction (↔), the nose height (a) being substantially equal to or smaller than the groove depth (b), and/or
b) **that** the groove (10) in the component (3) to be clamped has a groove length (c) in the clamping direction (↔) of the axial direction which is greater than the axial length (d) of the lug (9).

7. Clamping device (2) according to one of the preceding claims, **characterized in that** the clamping device (2) does not have an axial lock for axially locking the clamping bolt (1) .

8. Clamping device (2) according to one of the preceding claims, **characterized in that** the component (3) to be clamped is located above the clamping bolt (1) with respect to gravity, so that the groove (10) of the component (3) to be clamped falls onto the nose (9) in the event of a failure of the axial clamping force.

## Revendications

1. Dispositif de serrage (2) pour serrer un composant (3) sur un support (4), avec
a) un boulon de serrage (1) pour serrer le composant (3) sur le support (4),
a1) dans lequel le boulon de serrage (1) présente une extrémité de montage, qui est montée lors du fonctionnement dans le dispositif de serrage (2), et
a2) dans lequel le boulon de serrage présente une extrémité libre avec une surface de serrage (5) inclinée de manière oblique par rapport à une direction de serrage (↔), destinée à s'appuyer sur une surface de serrage (6) correspondante inclinée de manière oblique, du composant (3) à serrer, dans lequel les surfaces de serrage (5, 6) obliques du boulon de serrage (1) d'une part et du composant (3) à serrer d'autre part glissent les unes sur les autres lors de la sortie du boulon de serrage (1) et poussent ce faisant le composant (3) à serrer contre le support (4), et avec
b) un entraînement de boulon de serrage, qui peut au choix faire rentrer dans le dispositif de serrage (2) ou faire sortir hors du dispositif de serrage (2) le boulon de serrage (1) le long d'une direction de serrage (↔),
**caractérisé en ce**
c) **que** le boulon de serrage (1) présente un élément de blocage (9), lequel peut relier le boulon de serrage (1) par complémentarité de forme au composant (3) à serrer et qui ainsi protège le composant (3) à serrer d'une éjection, et
d) **que** l'élément de blocage (9) est un ergot (9), qui est installé au niveau du boulon de serrage (1) et fait saillie du boulon de serrage (1) de manière transversale par rapport à la direction de serrage (↔) afin de venir en prise avec une rainure (10) dans le composant (3) à serrer.

2. Dispositif de serrage (2) selon la revendication 1, **caractérisé en ce que** l'ergot (9) présente au niveau de son extrémité distale un plan oblique ascendant (11) pour éviter, lors de la sortie du boulon de serrage (1) hors du dispositif de serrage (2), un blocage du boulon de serrage (1).

3. Dispositif de serrage (2) selon l'une quelconque des revendications précédentes, **caractérisé en ce**
a) **que** l'ergot (9) est disposé au centre dans la section transversale de manière transversale par rapport à la direction de serrage (↔) et ne s'étend pas sur toute la largeur du boulon de serrage (1), ou
b) **que** l'ergot (9) s'étend dans la section transversale de manière transversale par rapport à la direction de serrage (↔) sur toute la largeur du boulon de serrage (1), ou
c) **que** l'ergot (9) présente deux parties d'ergot (9.1, 9.2), qui sont toutes deux disposées à l'extérieur latéralement et de manière excentrée dans la section transversale de manière transversale par rapport à la direction de serrage (↔).

4. Dispositif de serrage (2) selon l'une quelconque des revendications précédentes, **caractérisé en ce**
a) **que** se situe, au niveau de la surface enveloppante du boulon de serrage (1), dans une direction axiale entre l'ergot (9) et la surface de serrage oblique, une surface d'appui (7), qui est orientée de manière parallèle par rapport à la direction de serrage (,), dans lequel la surface d'appui du boulon de serrage (1) peut s'appuyer sur une surface d'appui (8) correspondante dirigée de manière parallèle par rapport à la direction de serrage (↔) au niveau du composant (3) à serrer, ou
b) **que** l'ergot (9) jouxte dans une direction axiale sans transition la surface de serrage (5) oblique.

5. Dispositif de serrage (2) selon l'une quelconque des revendications précédentes, **caractérisé en ce**
a) **que** la surface de serrage (5) du boulon de serrage (1) est inclinée par rapport à la direction de serrage (↔) selon un angle, qui est supérieur à 2°, 5°, 10° ou 15° et/ou inférieur à 45°, 30° ou 25°, et/ou
b) **que** le plan oblique ascendant (11) est incliné au niveau de l'ergot (9) par rapport à la direction de serrage (↔) selon un angle, qui est supérieur à 2°, 5°, 10° ou 15° et/ou inférieur à 45°, 30° ou 25°, et/ou
c) **que** les surfaces de serrage (5, 6) du boulon de serrage (1) d'une part et du composant (3) à serrer d'autre part sont parallèles au plan, et/ou
d) **que** l'ergot (9) est formé d'un seul tenant au niveau du boulon de serrage (1).

6. Dispositif de serrage (2) selon l'une quelconque des revendications précédentes, **caractérisé en ce**
a) **que** l'ergot (9) dépasse de la surface enveloppante du boulon de serrage (1) latéralement avec une hauteur d'ergot (a) définie et la rainure (10) dans le composant (3) à serrer présente une profondeur de rainure (b) définie de manière transversale par rapport à la direction de serrage (↔), dans lequel la hauteur d'ergot (a) est sensiblement égale à la profondeur de rainure (b) ou inférieure, et/ou
b) **que** la rainure (10) dans le composant (3) à serrer présente dans la direction de serrage (↔) en direction axiale une longueur de rainure (c), qui est supérieure à la longueur axiale (d) de l'ergot (9).

7. Dispositif de serrage (2) selon l'une quelconque des revendications précédentes, **caractérisé en ce que** le dispositif de serrage (2) ne présente aucun verrouillage axial pour verrouiller de manière axiale le boulon de serrage (1).

8. Dispositif de serrage (2) selon l'une quelconque des revendications précédentes, **caractérisé en ce que** le composant (3) à serrer se trouve par rapport à la gravité au-dessus du boulon de serrage (1) de sorte que le composant (3) à serrer tombe sur l'ergot (9) avec la rainure (10) dans le cas d'une défaillance de la force de serrage axiale.
